# EUROPEAN PATENT APPLICATION

(11) **EP 2 884 685 A1**
(43) Date of publication of application: **17.06.2015**
(21) Application number: 13197227.5
(22) Date of filing: 13.12.2013
(51) Int. Cl.: H04L 1/06

(54) **Frequency domain transmit diversity**

(71) Applicant: Siemens Aktiengesellschaft, 80333 München (DE)
(72) Inventor: Hulbert, Anthony Peter, Bassett Green, Southampton, Hampshire SO16 3DF (GB)

(57) **Abstract**

The efficiency of coding for wireless transmission shall be improved. Therefore, there is provided a device and a method of encoding data including the steps of providing a plurality of data symbols (SY1, SY2, SY3) to be encoded in a predetermined symbol arrangement, encoding one symbol (SY1, SY2) of said plurality of data symbols by applying space time diversity coding in said symbol arrangement, and encoding another symbol (SY3) of said plurality of data symbols by applying space frequency diversity coding in said symbol arrangement.

## Description

The present invention relates to a method of encoding data including the steps of providing a plurality of data symbols to be encoded in a predetermined symbol arrangement, and encoding at least one pair of symbols of said plurality of data symbols by applying space time diversity coding in said symbol arrangement. Furthermore, the present invention relates to a corresponding device for encoding a plurality of data symbols in a predetermined symbol arrangement, comprising first encoding means for encoding at least one pair of symbols of said plurality of data symbols by applying space time diversity coding in said symbol arrangement.

Some applications require the wireless transmission of data bursts of variable length. Where high reliability is a requirement, the use of Alamouti space time transmit diversity as described in Alamouti, M., "A Simple Transmit Diversity Technique for Wireless Communications", IEEE Journal on Select Areas in Communications, Vol. 16, No. 8, October 1998, pp. 1451-1458, is highly beneficial. The preferred diversity order is typically two. The use of space time diversity with order two requires an even number of OFDM symbols (Orthogonal Frequency Division Multiplex) to be transmitted in every burst as explained in the above article of Alamouti. If the modulation format is OFDM, then it is possible to transmit useful amounts of data using a very small number of OFDM symbols, because each OFDM symbol can carry significant data, having many sub-carriers. Thus, the smallest number of OFDM symbols in a burst in this case would be two. This may be adequate for certain data transmission requirements, whilst others might require the transmission of marginally more data than can be carried in two OFDM symbols. For the basic space time transmit diversity, if more than two OFDM symbols are required to carry the data, this diversity can only be maintained if four OFDM symbols are transmitted. This could result in a high degree of inefficiency, in the sense of wasted transmission time. It would be advantageous if it were possible to transmit an odd number of OFDM symbols to satisfy these requirements more optimally.

Space frequency diversity is an additional known technique for providing diversity. For instance, Alamouti describes space frequency coding in the above article on page 1453, paragraph III. A. 1. This is very similar to space time diversity. In this case, the Alamouti diversity coding is applied to adjacent pairs of sub-carriers in the OFDM symbol. Since diversity is applied independently to every OFDM symbol, any number of symbols, odd or even, may be used. However, as for space time coding with pairs of OFDM symbols, it is necessary to obtain estimates for the channels from both transmitters to the receiver. This requires sounding of both channels and the inclusion of pilot sub-carriers to facilitate this. If enough pilot sub-carriers were included to sound both channels in every OFDM symbol, the overhead is likely to be excessive.

It is also known that space frequency diversity is marginally less efficient than space time diversity. This is because the conventional transmit space diversity approach that encodes in the time domain relies on the channel being identical in the two time positions. In general, this is true for a very good approximation for a useful number of applications. However, in a frequency selective multipath scenario, where transmit space diversity is applied that encodes in the frequency domain the channel on adjacent sub-carriers is typically not such a good approximation to equality as it is in the time domain. Moreover, the need to include pilot sub-carriers may, depending on the grid used, for some pairs of data sub-carriers introduce additional separation in frequency.

In view of that, it is the object of the present invention to provide a method and a device for encoding, which enable a higher degree of efficiency for data transmission.

According to the present invention, this object is solved by a method of encoding data including the steps of providing a plurality of data symbols to be encoded in a predetermined symbol arrangement, encoding one symbol of said plurality of data symbols by applying space time diversity coding in said symbol arrangement, as well as encoding another symbol of said plurality of data symbols by applying space frequency diversity coding in said symbol arrangement.

Furthermore, there is provided a device for encoding a plurality of data symbols in a predetermined symbol arrangement, comprising first encoding means for encoding one symbol of said plurality of data symbols by applying space time diversity coding in said symbol arrangement, and second encoding means for encoding another symbol of said plurality of data symbols by applying space frequency diversity coding in said symbol arrangement.

The advantage of the present invention is to combine space time diversity coding and space frequency diversity coding, which allows to shorten symbol arrangements in certain circumstances.

In one embodiment the predetermined symbol arrangement includes exactly three symbols, two of said three symbols being encoded by space time diversity coding and one of said three symbols being encoded by space frequency diversity coding. Thus, a symbol arrangement is not limited to two or four symbols as it is if pairs of symbols are used for space time diversity coding.

The predetermined symbol arrangement may include generally 2n+1 OFDM symbols, where n is an integer and 2n symbols are encoded using space time diversity coding. This means that an even number of OFDM symbols are encoded using space time diversity coding and one single symbol is encoded using space frequency diversity coding. Thus, one can benefit from the general advantages of space time diversity coding and from the temporal flexibility of the space frequency diversity coding.

Preferably, the space time diversity coding is Alamouti space time diversity coding and the space frequency diversity coding is Alamouti space frequency diversity coding. Both kinds of diversity coding are introduced in the above article of Alamouti and are well known in the art, meanwhile. The diversity coding of Alamouti specifically relates to two transmit and one or two receive antennas. However, the present invention is not limited to such simple diversity technique. Rather more antennas can be used for establishing a proper diversity technique for wireless communication. For this, it is generally referred to well-known MIMO techniques.

At least one of the symbols encoded using space time diversity coding may include pilot sub-carriers for estimation of a transmission channel. With such estimation of the channel demodulation of the data can be facilitated.

In one embodiment, the symbol being encoded using space frequency diversity coding does not include pilot sub-carriers. Usually it is not necessary to estimate the channel again, if it has already been estimated one symbol before.

Furthermore, the space frequency diversity coded symbol may be located at the beginning or the end of the predetermined symbol arrangement. Alternatively, the space frequency diversity coded symbol may be located in the middle of an even number of space time diversity coded symbols. This means that there is high flexibility concerning the ordering of the symbols within the predetermined symbol arrangement.

The above further developments and specific features may be related to the inventive method as well as to the inventive device for encoding.

The present invention will now be explained in more detail in connection with the attached drawing showing in:

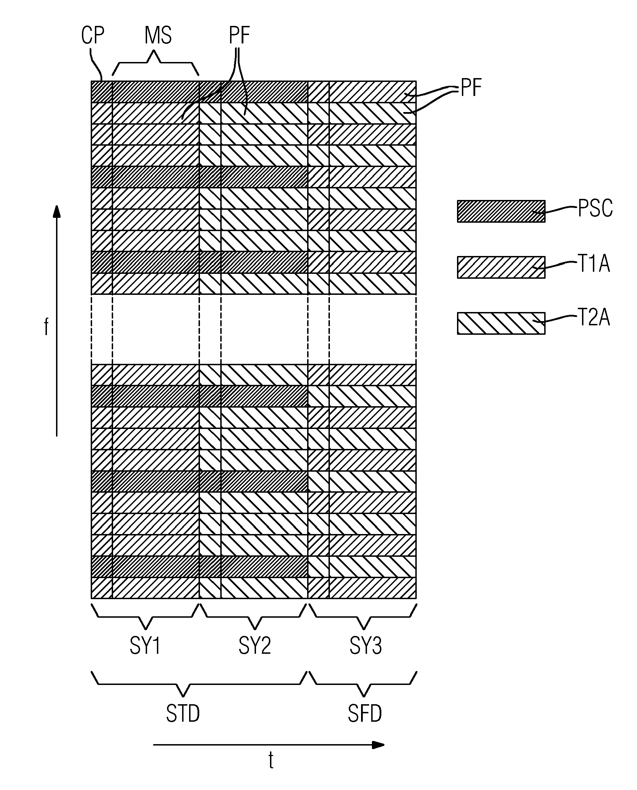

- FIG 1: a three symbol mixed diversity burst for wireless transmission.

The following embodiments represent preferred examples of the present invention.

According to the general aspect of the present invention, a combination of space time and space frequency diversity is used whenever (but not exclusively) an odd number of OFDM symbols (minimum three) is required to support the transmission of the necessary data. Specifically, if the required number of OFDM symbols is equal to 2n+1, where n is an integer (guaranteeing an odd number of symbols), then preferably 2n of the symbols are encoded using space time diversity and the other symbol(s) is/are encoded using space frequency diversity. This has several benefits:
- Accepting that space frequency diversity has slightly poorer performance than space time diversity, the minimum amount of data is encoded using space frequency diversity. The overall performance will depend on the weighted average of the diversity performance of the two types of diversity. So it will always be closer to that of space time diversity.
- Since the number of OFDM symbols that implement space time diversity is always even, some or all of these can carry pilot sub-carriers to provide estimation of the channels from the two transmitters. This allows the OFDM symbol that is encoded for space frequency diversity to contain no pilot sub-carriers. The benefit of this is that the sub-carriers in each pair of space frequency diversity are always adjacent temporally. This minimizes any degradation due to de-correlation.

FIG 1 illustrates a three OFDM burst encoded according to the above principle. The "three OFDM burst" is a predetermined symbol arrangement including three symbols SY1, SY2 and SY3. These three symbols are arranged immediately one after another chronologically. A corresponding time axis t is depicted in FIG 1.

The second dimension of the diagram of FIG 1 relates to the frequency f. Each symbol SY1, SY2 and SY3 is transmitted by using a plurality of sub-carriers. Each sub-carrier has its specific mean frequency (not shown in FIG 1). For the sake of simplicity, the sub-carriers are shown in a compressed way along the frequency dimension. Each sub-carrier is represented by a horizontal bar in FIG 1. It carries at least a portion of symbol SY1 or a variation of it at a first instant of time, at least a portion of symbol SY2 or a variation of it at a second instant of time and at least a portion of symbol SY3 or a variation of it in a third instant of time, i.e. each (portion of a) symbol is carried by a (specific) sub-carrier. In the wording of the present application, a symbol briefly consists of a plurality of sub-carriers.

Optionally, each symbol SY1, SY2 and SY3 and thus each symbol portion on any of the sub-carriers starts with a cyclic prefix CP. Preferably, the cyclic prefix CP is a repetition of the last part of a preceding symbol portion or preceding sub-carrier. The purpose of the cyclic prefix CP is to unambiguously identify the beginning of a symbol.

The cyclic prefix CP is followed by a data part representing a main OFDM symbol MS.

In FIG 1 the first two OFDM symbols SY1 and SY2 are encoded for space time diversity STD. These symbols SY1 and SY2 contain regular pilot sub-carriers PSC. The third and final OFDM symbol SY3 is encoded for space frequency diversity SFD. This symbol SY3 does not contain any pilot sub-carriers PSC.

The Alamouti coding takes symbol (or sub-carrier) modulation in pairs. In FIG 1 one pair of sub-carriers for space time diversity is referenced with PT. Such pair PT includes a portion of symbol SY1 and symbol SY2 arranged temporally one after another. In contrast to this, a pair of symbol portions used for space frequency diversity is referenced as PF in FIG 1. Such pair PF consists of signal portions of symbol SY3 only. The sub-carriers of such pair PF are arranged adjacently in the frequency dimension.

We denote the first symbol in a pair as s₀ and the second as s₁. Without the use of space time coding we would have one transmitter and would simply transmit s₀ followed by s₁. In the case of space time coding we have two transmitters and transmit the data as shown below in table 1 (reproduced from table 1 on page 1454 of the aforementioned Alamouti document).

**Table 1: Alamouti Space Time Coding**

| | Antenna 0 | Antenna 1 |
|---|---|---|
| Time t | s₀ | s₁ |
| Time t+T | -s₁* | s₀* |

This means that at a given symbol period, two signals are simultaneously transmitted from the two antennas. The signal transmitted from antenna 0 is denoted by s₀ and from antenna 1 by s₁. During the next symbol period t+T, signal (-s₁*) is transmitted from antenna 0, and signal s₀* is transmitted from antenna 1, where "*" is the complex conjugate operation.

The case of space frequency coding mirrors this as shown in the following table 2.

**Table 2: Alamouti Space Frequency Coding**

| | Antenna 0 | Antenna 1 |
|---|---|---|
| Frequency f | s₀ | s₁ |
| Frequency f+fₛ | -s₁* | s₀* |

At a given symbol period, two signals are simultaneously transmitted from the two antennas with the same frequency f. The signal transmitted from antenna 0 again is denoted by s₀ and from antenna 1 by s₁. In the same symbol period, signal (-s₁*) is transmitted from antenna 0 at frequency f+fₛ, and signal s₀* is transmitted from antenna 1 at the same frequency f+fₛ.

In FIG 1, the sub-carriers shaded according to "Type 1 Alamouti encoded sub-carrier" T1A correspond to the first rows of the above tables (time t or frequency f as appropriate). The sub-carriers shaded according to "Type 2 Alamouti encoded sub-carrier" T2A correspond to the second rows of the above tables (time t+T or frequency f+fₛ as appropriate).

The ordering of OFDM symbols shown in FIG 1 is only an example. Alternatives such as placing the space frequency coded OFDM symbol before or even between the space time coded OFDM symbols are also possible and fall within the scope of the present invention. For greater numbers of OFDM symbols (5, 7, etc.) the ordering is also flexible. Moreover, the space time coded OFDM symbols beyond the first two that have pilot sub-carriers may or may not include pilot sub-carriers. Thus, the pair of space time coded symbols with pilots is more significant than symbols without pilots and need to be processed first.

The advantage of the combined space time diversity coding and space frequency diversity coding is that if encoding in pairs is performed, then data bursts are not limited to arrangements of an even number of symbols. Rather, odd numbers of symbols may be arranged in a data burst and despite of this the coding can be based on pairs of sub-carriers as for Alamouti diversity coding. Thus, the efficiency of coding can be improved.

## Claims

1. Method of encoding data including the steps of
- providing a plurality of data symbols (SY1, SY2, SY3) to be encoded in a predetermined symbol arrangement, and
- encoding at least one pair of symbols (SY1, SY2) of said plurality of data symbols (SY1, SY2, SY3) by applying space time diversity coding in said symbol arrangement
**characterized by**
- encoding another symbol (SY3) of said plurality of data symbols (SY1, SY2, SY3) by applying space frequency diversity coding in said symbol arrangement.

2. Method according to claim 1, wherein said predetermined symbol arrangement includes exactly three symbols (SY1, SY2, SY3), two of said three symbols (SY1, SY2) being encoded by space time diversity coding and one of said three symbols (SY3) being encoded by space frequency diversity coding.

3. Method according to claim 1 or 2, wherein said predetermined symbol arrangement includes 2n+1 OFDM symbols, where n is an integer and 2n symbols are encoded using space time diversity coding.

4. Method according to one of the preceding claims, wherein said space time diversity coding is Alamouti space time diversity coding and said space frequency diversity coding is Alamouti space frequency diversity coding.

5. Method according to one of the preceding claims, wherein at least one of the symbols encoded using space time diversity coding (SY1, SY2) includes pilot sub-carriers (PSC) for estimation of a transmission channel.

6. Method according to one of the preceding claims, wherein said symbol being encoded using space frequency diversity (SY3) coding does not include pilot sub-carriers (PSC).

7. Method according to one of the preceding claims, wherein said space frequency diversity coded symbol (SY3) is located at the beginning or the end of said predetermined symbol arrangement.

8. Method according to one of the claims 2 to 6, wherein said space frequency diversity coded symbol (SY3) is located between the two space time diversity coded symbols (SY1, SY2).

9. Device for encoding a plurality of data symbols (SY1, SY2, SY3) in a predetermined symbol arrangement, comprising
- first encoding means for encoding one symbol (SY1, SY2) of said plurality of data symbols (SY1, SY2, SY3) by applying space time diversity coding in said symbol arrangement,
**characterized by**
- second encoding means for encoding another symbol (SY3) of said plurality of data symbols (SY1, SY2, SY3) by applying space frequency diversity coding in said symbol arrangement.

## Amended claims

### Amended claims in accordance with Rule 137(2) EPC.

1. Method of encoding data including the steps of
- providing a plurality of data symbols (SY1, SY2, SY3) to be encoded in a predetermined symbol arrangement,
- encoding at least one pair of symbols (SY1, SY2) of said plurality of data symbols (SY1, SY2, SY3) by applying space time diversity coding in said symbol arrangement without space frequency diversity coding and
- encoding another symbol (SY3) of said plurality of data symbols (SY1, SY2, SY3) by applying space frequency diversity coding in said symbol arrangement without space time diversity coding.

2. Method according to claim 1, wherein said predetermined symbol arrangement includes exactly three symbols (SY1, SY2, SY3), two of said three symbols (SY1, SY2) being encoded by space time diversity coding and one of said three symbols (SY3) being encoded by space frequency diversity coding.

3. Method according to claim 1 or 2, wherein said predetermined symbol arrangement includes 2n+1 OFDM symbols, where n is an integer and 2n symbols are encoded using space time diversity coding.

4. Method according to one of the preceding claims, wherein said space time diversity coding is Alamouti space time diversity coding and said space frequency diversity coding is Alamouti space frequency diversity coding.

5. Method according to one of the preceding claims, wherein at least one of the symbols encoded using space time diversity coding (SY1, SY2) includes pilot sub-carriers (PSC) for estimation of a transmission channel.

6. Method according to one of the preceding claims, wherein said symbol being encoded using space frequency diversity (SY3) coding does not include pilot sub-carriers (PSC).

7. Method according to one of the preceding claims, wherein said space frequency diversity coded symbol (SY3) is located at the beginning or the end of said predetermined symbol arrangement.

8. Method according to one of the claims 2 to 6, wherein said space frequency diversity coded symbol (SY3) is located chronologically between the two space time diversity coded symbols (SY1, SY2).

9. Device for encoding a plurality of data symbols (SY1, SY2, SY3) in a predetermined symbol arrangement, comprising
- first encoding means for encoding one symbol (SY1, SY2) of said plurality of data symbols (SY1, SY2, SY3) by applying space time diversity coding in said symbol arrangement without space frequency diversity coding, and
- second encoding means for encoding another symbol (SY3) of said plurality of data symbols (SY1, SY2, SY3) by applying space frequency diversity coding in said symbol arrangement without space time diversity coding.
